(19) Europäisches Patentamt
European Patent Office
Office européen des brevets

(11) **EP 1 349 335 B1**

(12) **EUROPEAN PATENT SPECIFICATION**

(45) Date of publication and mention
of the grant of the patent:
**19.09.2007 Bulletin 2007/38**

(51) Int Cl.:
*H04L 25/02* (2006.01)  *H04L 25/03* (2006.01)
*H04L 27/26* (2006.01)

(21) Application number: **03006240.0**

(22) Date of filing: **20.03.2003**

(54) **Selection of interpolation method for multicarrier reception**

Auswahl eines Interpolationsverfahrens zum Mehrträgerempfang

Sélection d'un procédé d'interpolation pour la réception multiporteuse

(84) Designated Contracting States:
**DE FR GB**

(30) Priority: **26.03.2002 JP 2002084909**

(43) Date of publication of application:
**01.10.2003 Bulletin 2003/40**

(73) Proprietor: **Kabushiki Kaisha Kenwood
Hachiouji-shi,
Tokyo 192-8525 (JP)**

(72) Inventor: **Shinoda, Atsushi
Sagamihara-shi,
Kanagawa 229-0029 (JP)**

(74) Representative: **Leinweber & Zimmermann
Rosental 7,
II Aufgang
80331 München (DE)**

(56) References cited:
**EP-A- 0 898 381        EP-A- 1 032 169**

- **JAE KYOUNG MOON ET AL: "Performance of channel estimation methods for OFDM systems in a multipath fading channels" IEEE TRANSACTIONS ON CONSUMER ELECTRONICS, vol. 46, no. 1, February 2000 (2000-02), pages 161-170, XP002395615 IEEE, USA ISSN: 0098-3063**
- **VITTORIA MIGNONE ET AL: "CD3-OFDM: A Novel Demodulation Scheme for Fixed and Mobile Receivers" IEEE TRANSACTIONS ON COMMUNICATIONS, vol. 44, no. 9, September 1996 (1996-09), XP011008784 IEEE, PISCATAWAY, NJ, US ISSN: 0090-6778**

**Description**

**BACKGROUND OF THE INVENTION**

**Field of the Invention**

The present invention relates to an equalizer used for a digital terrestrial broadcasting receiver.

Related Background Art

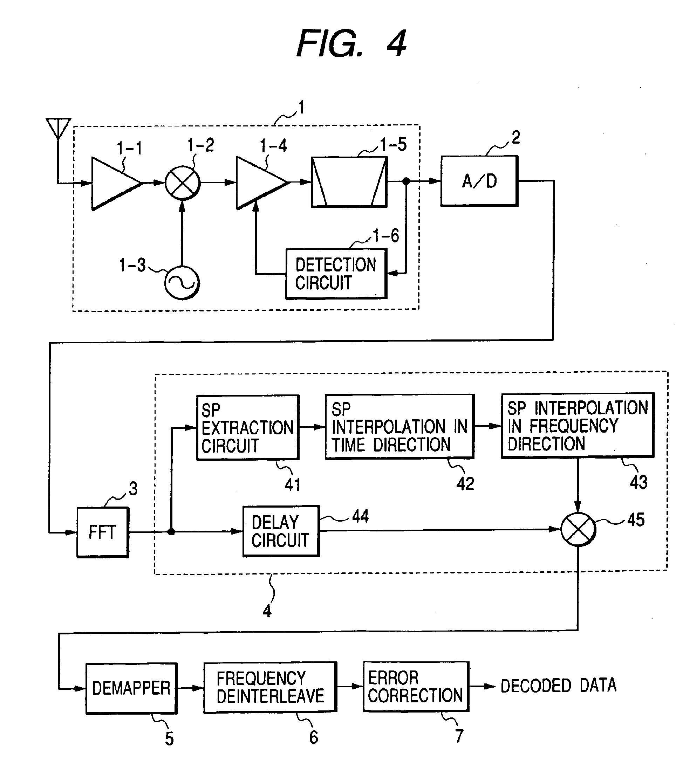

For digital terrestrial broadcasting, OFDM modulation is used and its details are specified, for example, in the ETS (European Telecommunication Standard). Based on this, main sections of a digital terrestrial broadcasting receiver are constructed as shown in FIG. 4. That is, in the digital terrestrial broadcasting receiver, a signal received from an antenna is converted to an intermediate frequency signal at a front end 1, supplied to an A/D converter 2 for an A/D conversion, then subjected to FFT (fast Fourier transform) calculation processing at an FFT calculation circuit 3, subjected to demodulation processing and the demodulated signal is equalized at an equalizer 4 and the equalized signal is demapped at a demapper 5, deinterleaved at a frequency deinterleave circuit 6, error-corrected at an error correction circuit 7 and then decoded.

Here, in the front end 1, the received signal from the antenna is amplified at an amplifier 1-1, the amplified output is frequency-mixed with an oscillation output from a local oscillator 1-3 by a mixer 1-2 and converted to an intermediate frequency signal, and the intermediate frequency signal is amplified at a variable gain amplifier 1-4, band-restricted at a band pass filter 1-5, sent to an A/D converter 2 and at the same time supplied to a detection circuit 1-6 where the signal is subjected to detection and AGC (automatic gain control) for controlling the gain of the variable gain amplifier 1-4 according to an AGC voltage based on the detection output.

The case with ISDB-T (Integrated Service Digital Broadcasting Terrestrial) is also similar to the case with the above-described DVB-T (Digital Video Broadcasting Terrestrial), but in the case of ISDB-T, time deinterleave is further added besides frequency deinterleave.

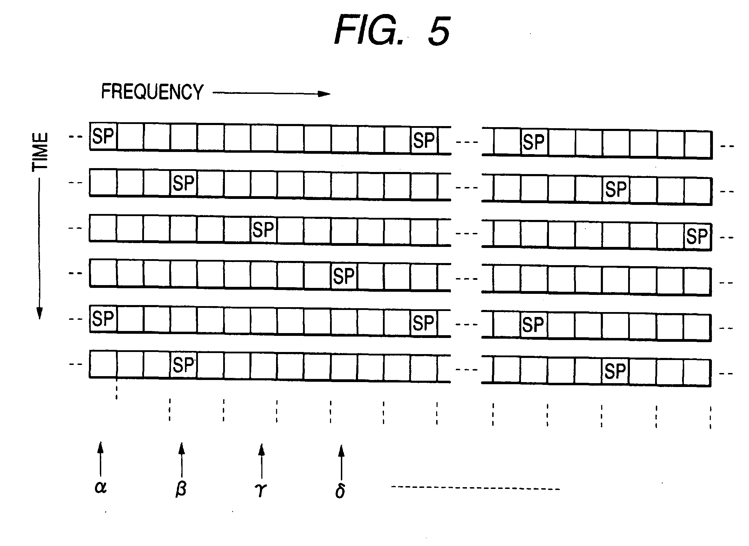

In a carrier frame configuration at digital terrestrial broadcasting, part of a frame structure for both DVB-T and ISDB-T is constructed as schematically illustrated in FIG. 5 in such a way that one pilot carrier (carrier whose amplitude and phase are known) called "scattered pilot" (also denoted as "SP") is inserted every 12 carriers in the frequency direction and every 4 carriers in the time direction. Other carriers are data carriers.

In the case of DVB-T, the number of carriers (in the frequency direction) per frame is 1705 (in 2K mode) and 6817 (in 8K mode) and the number of symbols (in the time direction) is 68. In the case of ISDB-T, the number of carriers (in the frequency direction) is 1405 (in mode 1), 2809 (in mode 2) and 5617 (in mode 3) and the number of symbols (in the time direction) is 204.

Data carriers are modulated with a maximum of 64 QAM. For this reason, the equalizer uses this SP to correct the amplitude and phase of each data carrier. However, since SP's are inserted in a scattered manner as shown above, an equalization coefficient between SPs is calculated through interpolation in order to correct amplitudes and phase shifts of data carriers based on a nearby SP.

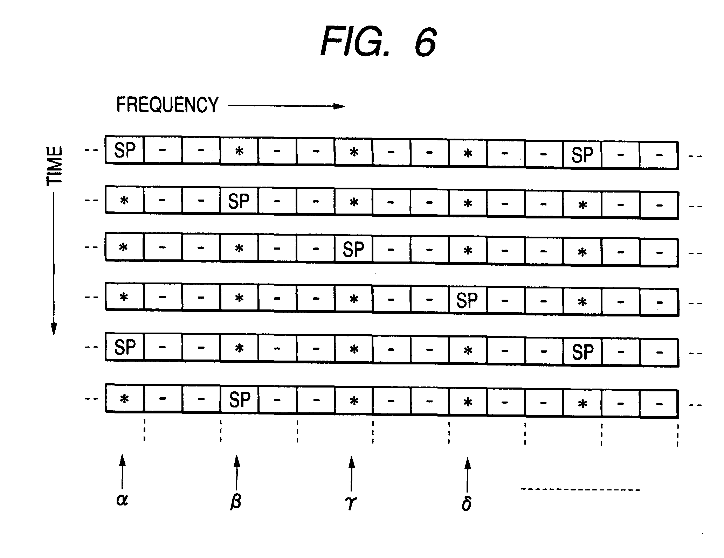

Equalization is performed by adopting a configuration in such a way that three blank sections between SPs each of which is inserted every 4 OFDM symbols in the time direction are interpolated based on the SPs in the time direction and thereby equalization coefficients at positions marked (*) in FIG. 6 are calculated as if SPs exist in all those sections in the time direction and similar interpolation is applied to the frequency direction based on this, equalization coefficients for parts marked (-) in FIG. 6 are calculated as if SPs or equalization coefficients exist in both the time direction and frequency direction. In FIG. 5 and FIG. 6, carrier columns in the time direction where SPs are inserted are marked with reference characters $\alpha$, $\beta$, $\gamma$, $\delta$, ....

On the other hand, as is apparent from FIG. 4, in the equalizer 4, SPs are extracted from a demodulated signal at an SP extraction circuit 41, interpolated based on the extracted SPs in the time direction at a time-direction SP interpolation circuit 42, and the interpolated simulated SPs in the time direction are regarded as equalization coefficients in the time direction, then interpolated based on the SPs in the time direction and equalization coefficients in the time direction at a frequency-direction SP interpolation circuit 43, the interpolated simulated SPs in the frequency direction are regarded as the equalization coefficients in the frequency direction and in this way SPs and equalization coefficients in the time direction and SPs and equalization coefficients in the frequency direction are obtained.

On the other hand, the demodulated signal is delayed by a delay circuit 44 for compensating for delays in the processing times at the time-direction SP interpolation circuit 42 and the frequency-direction SP interpolation circuit 43 and the demodulated signal delayed by the delay circuit 44 is subjected to equalization processing at an equalization calculator 45 using SPs and equalization coefficients output from the frequency-direction SP interpolation circuit 43 and sent to the demapper 5.

However, equalization coefficients between SPs in the time direction are conventionally calculated using a filter coefficient value (also denoted as "lowpass filter coefficient value") of a digital low pass filter, see for example EP 1032169. In the case of reception at a fixed position, it is convenient to make the passage bandwidth of the digital low pass filter as narrow as possible because it is possible to suppress noise and improve the reception characteristics.

However, considering the case where the reception mode is mobile reception, excessively narrowing the passage bandwidth of the digital low pass filter results in a problem that fast fading cannot be followed, and on the contrary, widening the passage bandwidth of the digital low pass filter results in another problem that the system becomes vulnerable to noise.

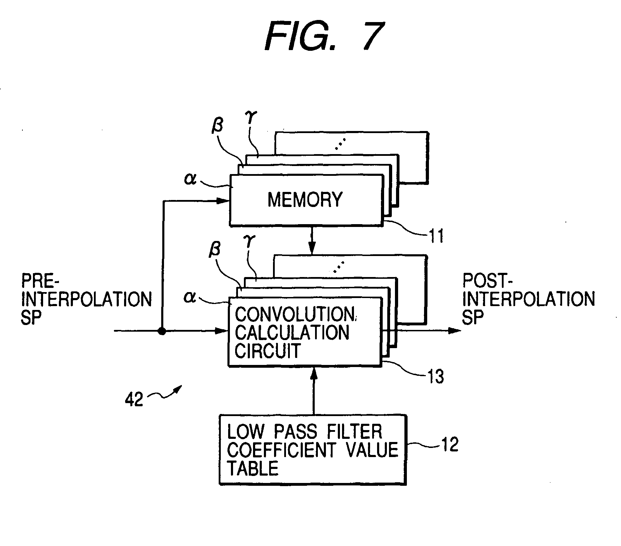

Furthermore, interpolation using low pass filter coefficient values is performed with a configuration shown in FIG. 7, but in the case of interpolation using low pass filter coefficient values, the values of originally existing SPs themselves are possibly changed by interpolation calculations resulting in a problem that this may cause deterioration of the reception characteristics in the case where the reception mode is mobile reception.

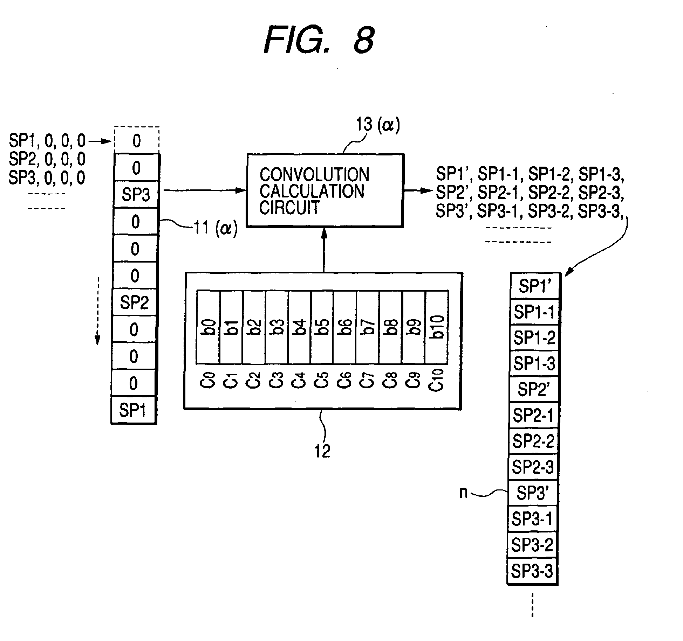

This will be further explained based on FIG. 7 and FIG. 8. SPs before interpolation (pre-interpolation SPs) including blank parts shown in FIG. 5 in the OFDM frame extracted at the SP extraction circuit 41 are stored in memories 11 to calculate equalization coefficients in the time direction and the corresponding low pass filter coefficient values prestored in the low pass filter coefficient value table 12 and the SPs read from the memory 11 are subjected to a convolution calculation at convolution calculation circuits 13 to obtain equalization coefficients.

Here, memories 11 and convolution calculation circuits 13 are provided in a one-to-one correspondence with the carrier columns $\alpha$, $\beta$, $\gamma$, $\delta$, ... in the time direction shown in FIG. 5. The number of carrier columns in the case of 2K mode in DVB-T is ([1705/3] + 1) and [.] is a Gaussian symbol and 1705 is divided by 3 because a carrier column with an SP inserted exists every 3 carriers in the frequency direction.

Interpolation and calculations of equalization coefficients in the case of the above-described carrier column $\alpha$ will be explained based on the schematic view in FIG. 8. In FIG. 8, reference numeral 11($\alpha$) denotes the memory 11 corresponding to the carrier column $\alpha$, reference numeral 13($\alpha$) denotes the convolution calculation circuit 13 corresponding to the carrier column $\alpha$, and reference character n denotes a SPs and equalization coefficients inserted in the carrier column $\alpha$. SP1, 0, 0, 0, SP2, 0, 0, 0, SP3, 0, 0, 0, ... are sequentially stored in the memory 11($\alpha$). Here, SP1, SP2 and SP3 are sequentially numbered from the top for SPs of the carrier column $\alpha$ described in FIG. 5 and 0 denotes a section to be interpolated.

The low pass filter coefficient table 12 prestores low pass filter coefficient values b0, b1, ..., b5 (low pass filter coefficient values at center address positions), ..., b9, b10 at addresses C0, C1, ..., C9 and C10 as illustrated in FIG. 8. The SPs in the time direction (carrier column $\alpha$) stored in the memory 11($\alpha$) and low pass filter coefficient values are subjected to convolution calculation at symbol intervals and SPs indicated by reference character n shown in FIG. 8 and equalization coefficients, ..., SP3-3, SP3-2, SP3-1, SP3', SP2-3, SP2-2, SP2-1, SP2', SP1-3, SP1-2, SP1-1, SP1' are calculated in association with, ..., SP1, 0, 0, 0, SP2, 0, 0, 0, SP3, 0, 0, 0, ..., stored in the memory 11($\alpha$). Here, SP1, 0, 0, 0, SP2, 0, 0, 0, SP3, 0, 0, 0, ... have a one-to-one correspondence with SP1', SP1-1, SP1-2, SP1-3, SP2', SP2-1, SP2-2, SP2-3, SP3', SP3-1, SP3-2, SP3-3, ....

For example, SP2' that corresponds to SP2, equalization coefficients SP2-1, SP2-2 and SP2-3 interpolated between SP2 and SP3 and SP3' that corresponds to SP3, which are equalization coefficient calculation results, are as follows:

$$\text{SP2'} = 0 \times b0 + SP1 \times b1 + 0 \times b2 + 0 \times b3 + 0 \times b4$$
$$+ SP2 \times b5 + 0 \times b6 + 0 \times b7 + 0 \times b8$$
$$+ SP3 \times b9 + 0 \times b10$$
$$= SP1 \times b1 + SP2 \times b5 + SP3 \times b9$$

Likewise,

$$\text{SP2-1} = SP1 \times b0 + SP2 \times b4 + SP3 \times b8$$

$$SP2-2 = SP2 \times b3 + SP3 \times b7$$

$$SP2-3 = SP2 \times b2 + SP3 \times b6 + SP4 \times b10$$

$$SP3' = SP2 \times b1 + SP3 \times b5 + SP4 \times b9$$

Thus, when low pass filter coefficient values are used, SP2' after interpolation becomes almost an approximate value of SP2 before interpolation (pre-interpolation SP2), but it may be a value different from SP2. The same applies to the relationship between SP3' after interpolation (post-interpolation SP3') and SP3 before interpolation (pre-interpolation SP3).

It is an object of the present invention to provide an equalizer capable of obtaining favorable reception characteristics in both cases where the reception mode is fixed-position reception and where the reception mode is mobile reception.

## SUMMARY OF THE INVENTION

The equalizer according to the present invention is an equalizer for a digital terrestrial broadcasting receiver that receives an OFDM-modulated signal, including extraction means for extracting a scattered pilot in a time direction during demodulation output at the digital terrestrial broadcasting receiver, a spline interpolation coefficient value table that stores spline interpolation coefficient values in which a spline interpolation coefficient value in the central position is 1 while spline interpolation coefficient values at positions $\pm 4n$ (n: natural number) from the central position are 0, a low pass filter coefficient value table that stores low pass filter coefficient values, decision means for deciding whether the reception mode of the digital terrestrial broadcasting receiver is fixed-position reception or mobile reception, a changeover switch that selects, when the decision means decides that the reception mode is fixed-position reception, a low pass filter coefficient value read from the low pass filter coefficient value table and selects, when the decision means decides that the reception mode is mobile reception, a spline interpolation coefficient value read from the spline interpolation coefficient value table and a convolution calculation circuit that carries out a convolution calculation between the extracted scattered pilots in the time direction and coefficient values output through the changeover switch to determine equalization coefficients for interpolating between scattered pilots in the time direction, wherein demodulated output is subjected to equalization processing based on the scattered pilots in the time direction and the interpolated equalization coefficients.

According to the equalizer of the present invention, when the reception mode is fixed-position reception, a low pass filter count value with a passage bandwidth fixed is used for SP interpolation and when the reception mode is mobile reception, a spline interpolation coefficient value is used for SP interpolation, and therefore favorable reception characteristics are obtained in both cases where the reception mode is fixed-position reception and where the reception mode is mobile reception.

Furthermore, according to the equalizer of the present invention, the spline interpolation coefficient value in the central position is 1 and the spline interpolation coefficient values at positions $\pm 4n$ (n: natural number) from the above-described central position are 0, and therefore there is no change between the value of the scattered pilot before interpolation and value of the scattered pilot after interpolation, and furthermore since the equalization coefficient value between the scattered pilot in the time direction and the following scattered pilot is the result of a convolutional calculation between original scattered pilot pilots before and after the scattered pilot and spline interpolation coefficient value, the case with interpolation using the spline interpolation coefficient value is essentially the same as the case with interpolation using a low pass filter coefficient value, which makes the present invention an equalizer with an excellent reception characteristic also for mobile reception.

In the equalizer according to the present invention, the decision means can also be adapted so as to calculate power of a scattered pilot at a predetermined position extracted from the extraction means and decide, when a variation of the calculated power is equal to or greater than a predetermined value, that the reception mode is mobile reception and decide, when the variation of the calculated power is smaller than the predetermined value, that the reception mode is fixed-position reception, or decide, when a variation of an AGC voltage of the digital terrestrial broadcasting receiver is equal to or greater than a predetermined value, that the reception mode is mobile reception and decide, when the variation of the AGC voltage is smaller than the predetermined value, that the reception mode is fixed-position reception, or decide, when a variation of the sum total of all carrier levels calculated from the FFT-processed output is equal to or greater than a predetermined value, that the reception mode is mobile reception and decide, when the variation of the sum total of all carrier levels is smaller than the predetermined value, that the reception mode is fixed-position reception.

## BRIEF DESCRIPTION OF THE DRAWINGS

FIG. 1 is a block diagram showing a configuration of an SP interpolation circuit in the time direction of the equalizer according to an embodiment of the present invention;

FIG. 2 is a schematic view illustrating an operation of the SP interpolation circuit in a time direction of an equalizer according to the embodiment of the present invention;

FIG. 3 illustrates a spline interpolation coefficient value calculation according to the embodiment of the present invention;

FIG. 4 is a block diagram showing a configuration of main components of a digital terrestrial broadcasting receiver;

FIG. 5 illustrates a frame structure of DVB-T;

FIG. 6 is a schematic view illustrating calculations of equalization coefficients using SPs;

FIG. 7 is a block diagram showing a configuration of an SP interpolation circuit in the time direction of a conventional equalizer; and

FIG. 8 is a schematic view illustrating an operation of the SP interpolation circuit in the time direction of the conventional equalizer.

## DESCRIPTION OF THE PREFERRED EMBODIMENTS

Hereunder, an equalizer according to the present invention will be explained using an embodiment.

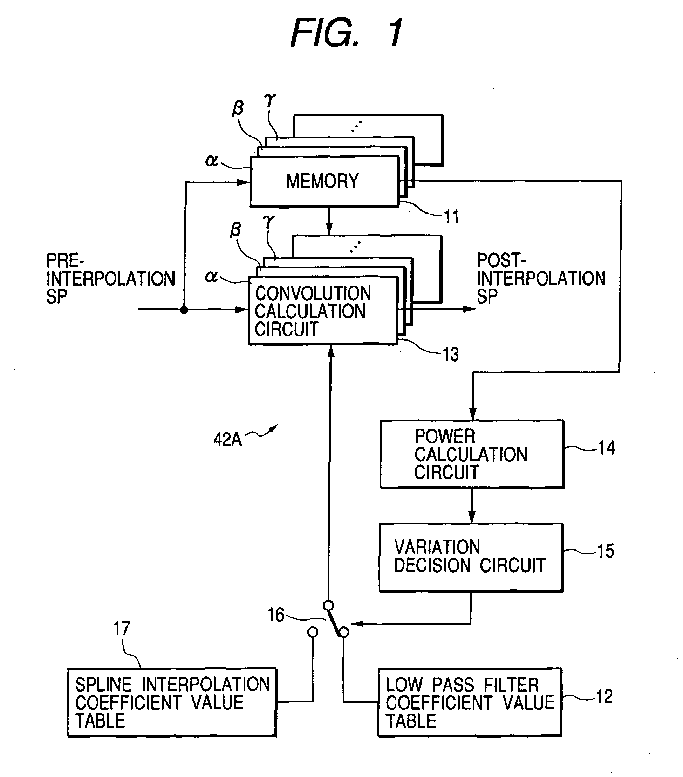

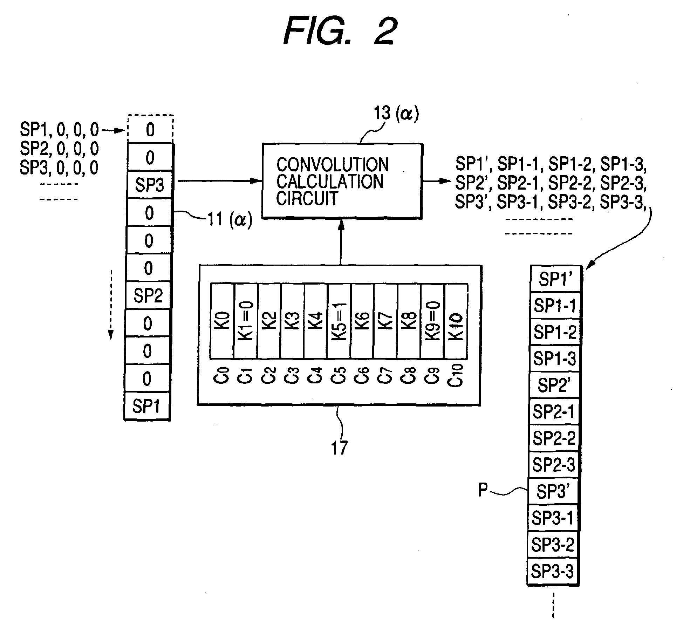

FIG. 1 is a block diagram showing a configuration of an SP interpolation circuit in a time direction of an equalizer according to an embodiment of the present invention and FIG. 2 is a schematic view illustrating an operation of the SP interpolation circuit in the time direction of the equalizer according to the embodiment of the present invention.

In the equalizer according to this embodiment of the present invention, a time-direction SP interpolation circuit 42A is used instead of the time-direction SP interpolation circuit 42. The time-direction SP interpolation circuit 42A is shown in contrast to the time-direction SP interpolation circuit 42 shown in FIG. 7 and the same components as those in the time-direction SP interpolation circuit 42 are assigned the same reference numerals.

As shown in FIG. 1, the time-direction SP interpolation circuit 42A stores in the memories 11 SPs before interpolation including the blank parts shown in FIG. 5 in an OFDM frame extracted by the SP extraction circuit 41 and extracts either one of a low pass filter count value in a low pass filter count value table 12 or a spline interpolation coefficient value prestored in a spline interpolation coefficient value table 17 through a changeover switch 16 to calculate equalization coefficients in the time direction.

Here, the memories 11 and convolution calculation circuits 13 are provided in a one-to-one correspondence with the carrier columns $\alpha$, $\beta$, $\gamma$, $\delta$, ..., in the time direction shown in FIG. 5 as in the case of the time-direction SP interpolation circuit 42.

An SP at a predetermined position read from the memory 11, for example, an SP at the first position on the carrier column $\alpha$ is read, then power of the SP is calculated by a power calculation circuit 14, a variation in the calculated power is decided by a variation decision circuit 15, and when the variation is decided to be equal to or greater than a predetermined decision value, the changeover switch 16 supplies a spline interpolation coefficient value from the spline interpolation coefficient value table 17 to the convolutional calculation circuit 13 to obtain an equalization coefficient through spline interpolation. When the decision result at the power decision circuit 15 of the power calculated by the power calculation circuit 14 shows that the variation is smaller than the predetermined value, the changeover switch 16 supplies a coefficient value from the low pass filter coefficient value table 12 to the convolution calculation circuit 13 to obtain an equalization coefficient according to the low pass filter count value.

Here, during fixed-position reception, the power variation calculated by the power calculation circuit 14 is small and in during mobile reception, the power variation calculated by the power calculation circuit 14 is large, and the power calculation circuit 14 and variation decision circuit 15 can decide whether the reception mode is fixed-position reception or mobile reception, and therefore the power calculation circuit 14 and variation decision circuit 15 constitute decision means for deciding whether the reception mode is fixed-position reception or mobile reception. Furthermore, since an SP is a complex number, the power calculation circuit 14 can calculate power of the SP by squaring the SP.

As shown above, the equalizer according to this embodiment of the present invention has the same configuration as that of the equalizer 4 shown in FIG. 4 except that it is provided with the time-direction SP interpolation circuit 42A instead of the time-direction SP interpolation circuit 42. The time-direction SP interpolation circuit 42A calculates an equalization coefficient in the time direction based on an SP in the time direction, the frequency-direction SP interpolation circuit 43 interpolates equalization coefficients in the frequency direction based on the SPs and equalization coefficients in the time direction, the equalization calculator 45 carries out equalization processing on the demodulated signal using SPs and equalization coefficients in the time direction, SPs and equalization coefficients in the frequency direction and outputs the signal to the demapper 5. In this case, the demodulated signal is also delayed by the delay circuit 44 for compensating for the delay in the processing time by the time-direction SP interpolation circuit 42A and the frequency-direction SP interpolation circuit 43 and then subjected to equalization processing.

Interpolation by the time-direction SP interpolation circuit 42A in the case of the aforementioned carrier column α will be explained based on the schematic view shown in FIG. 2 in contrast to FIG. 8. Reference numeral 11(α) denotes the memory 11 that corresponds to the carrier column α, reference numeral 13(a) denotes the convolution calculation circuit 13 that corresponds to the carrier column α and reference character p denotes SPs and equalization coefficients to be inserted in the carrier column α. The memory 11(α) sequentially stores SP1, 0, 0, 0, SP2, 0, 0, 0, SP3, 0, 0, 0, ..., as in the case shown in FIG. 8. Here, SP1, SP2 and SP3 are sequentially numbered from the top for SPs of the carrier column α described in FIG. 5 and 0 denotes a section to be interpolated.

Interpolation according to low pass filter coefficient values is the same as the above-described conventional case, and therefore explanations thereof are omitted and only interpolation according to spline interpolation coefficient values will be explained.

The spline interpolation coefficient value table 17 prestores spline interpolation coefficient values k0, k1, ..., k5 (spline interpolation coefficient values at center address positions), ..., k9, k10 at addresses C0, C1, ..., C9 and C10 as illustrated in FIG. 2. The SPs in the time direction (carrier column α) stored in the memory 11(α) and spline interpolation coefficient values are subjected to convolutional calculation at symbol intervals and SPs and equalization coefficients, ..., SP3-3, SP3-2, SP3-1, SP3', SP2-3, SP2-2, SP2-1, SP2', SP1-3, SP1-2, SP1-1, SP1' indicated by reference numeral p shown in FIG. 2 are calculated in association with, ..., SP1, 0, 0, 0, SP2, 0, 0, 0, SP3, 0, 0, 0, ... stored in the memory 11(α). Here, SP1, 0, 0, 0, SP2, 0, 0, 0, SP3, 0, 0, 0, ... also have a one-to-one correspondence with SP1', SP1-1, SP1-2, SP1-3, SP2', SP2-1, SP2-2, SP2-3, SP3', SP3-1, SP3-2, SP3-3, ....

With regard to spline interpolation coefficient values stored in the spline interpolation coefficient value table 17, spline interpolation coefficient value k5 at the center address position is set to 1, spline interpolation coefficient values k1 = k9 at address positions C1 = C9 away from the center address position by ±4n symbols are set to 0. Here, n is a natural number. The spline interpolation coefficient values at address positions away from the center address position by 4n symbols are set to 0 because SPs in the time direction are inserted every fourth SP in the time direction.

As in the case of interpolation with low pass filter coefficient values, SP2' that corresponds to SP2, equalization coefficients SP2-1, SP2-2 and SP2-3 interpolated between SP2 and SP3 and SP3' that corresponds to SP3, which are equalization results in the case of spline interpolation coefficients, are as follows:

$$SP2' = 0 \times k0 + SP1 \times k1 + 0 \times k2 + 0 \times k3 + 0 \times k4$$
$$+ SP2 \times k5 + 0 \times k6 + 0 \times k7 + 0 \times k8$$
$$+ SP3 \times k9 + 0 \times k10$$
$$= SP1 \times k1 + SP2 \times k5 + SP3 \times k9$$
$$= SP2$$

Thus, as shown by SP2' = SP2, the value of the SP itself does not change.

Likewise, SP2-1, SP2-2, SP2-3 and SP3' are calculated as follows:

$$SP2-1 = SP1 \times k0 + SP2 \times k4 + SP3 \times k8$$

$$SP2-2 = SP2 \times k3 + SP3 \times k7$$

$$SP2\text{-}3 = SP2 \times k2 + SP3 \times k6 + SP4 \times k10$$

$$SP3' = SP2 \times k1 + SP3 \times k5 + SP4 \times k9$$

$$= SP3$$

Thus, when spline interpolation coefficient values are used, as shown by SP' = SP, SP' after interpolation (post-interpolation SP') has the same value as SP before interpolation (pre-interpolation SP), and the interpolation calculation does not change the value of the original SP itself and the reception characteristics do not deteriorate when the reception mode is mobile reception. Furthermore, an equalization coefficient value between an SP in the time direction and the next SP is the result of a convolution calculation performed on the SPs before and after the SP using the spline interpolation coefficient value, which is essentially not different from the case where interpolation is performed using low pass filter coefficient values. Therefore, the equalizer according to this embodiment of the present invention is an equalizer with excellent mobile characteristics.

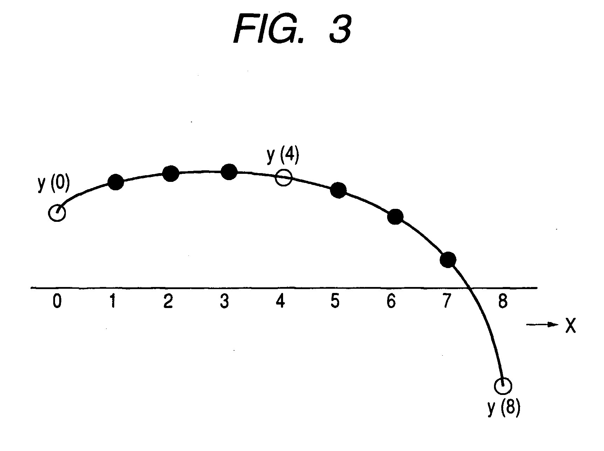

Then, the method of calculating spline interpolation coefficient values will be explained based on FIG. 3. This will be explained using a case where spline interpolation coefficient values represented by black bullets are calculated based on three real points (y(0), y(4), y(8)) represented by white bullets as an example. In FIG. 3, the white bullets correspond to real SPs, and black bullets, especially spline interpolation values (black bullets) for x = 1, 2, 3 will be calculated.

Assuming that a cubic spline function is used, the curve in FIG. 3 can be expressed:

$$y(x) = ax^3 + bx^2 + cx + d$$

However, from the standpoint of the nature of spline interpolation, x = 0, 4, 8 are values of real points themselves . Here, a, b, c and d are expressions which are obtained based on real points. Suppose these expressions are expressed as fa, fb, fc and fd.

Here:

$$y(x) = fa(y(0), y(4), y(8))x^3$$
$$+ fb(y(0), y(4), y(8))x^2$$
$$+ fc(y(0), y(4), y(8))x$$
$$+ fd(y(0), y(4), y(8))$$

End point processing will be omitted.

From these expressions, values of black bullets are derived from:

$$y(3) = 3^3 fa(y(0), y(4), y(8))$$
$$+ 3^2 fb(y(0), y(4), y(8))$$
$$+ 3fc(y(0), y(4), y(8))$$
$$+ fd(y(0), y(4), y(8))$$

$$y(5) = 5^3 fa(y(0), y(4), y(8))$$
$$+ 5^2 fb(y(0), y(4), y(8))$$
$$+ 5fc(y(0), y(4), y(8))$$
$$+ fd(y(0), y(4), y(8))$$
$$\ldots$$

When these expressions are developed, an equation y(x) = y(0)a(x) + y(4)b(x) + y(8)c(x) with respect to y(0), y(4), y(8) is finally obtained, where a(x), b(x) and c(x) are combinations of coefficients y(0), y(4), y(8) after developing the following functions at x coordinate:

$$fa(y(0), y(4), y(8))x^3,$$

$$fb(y(0), y(4), y(8))x^2,$$

$$fc(y(0), y(4), y(8))x,$$

$$fd(y(0), y(4), y(8))$$

From above, values at points x = 3, 4, 5, 6 are calculated as follows:

$$y(3) = y(0)a(3) + y(4)b(3) + y(8)c(3)$$

$$y(4) = y(0) \times 0 + y(4) \times 1 + y(8) \times 0$$

$$y(5) = y(0)a(5) + y(4)b(5) + y(8)c(5)$$

$$y(6) = y(0)a(6) + y(4)b(6) + y(8)c(6)$$

From above, if spline interpolation coefficient values are applied to FIG. 2, then:

$$k(0) = a(3), \ k(1) = 0, \ k(2) = a(5), \ k(2) = a(6),$$

$$k(4) = b(3), \ k(5) = 1, \ k(6) = b(5), \ k(7) = b(6),$$

$$k(8) = c(3), \ k(9) = 0, \ k(10) = c(5), \ k(11) = c(6)$$

This is equivalent to coefficients of terms y(0), y(4) and y(8) in expressions y(3) to y(6) being distributed longitudinally. As is apparent from this, the spline interpolation coefficient value at the center position (x = 5) is 1 and the spline interpolation coefficient values at positions (x = 1 = 9) away from there by 4n are 0, and others are spline interpolation coefficient values, and the spline interpolation coefficient table is obtained in this way.

Thus, according to the equalizer of this embodiment of the present invention, when the reception mode is fixed-position reception, a low pass filter count value with a passage bandwidth fixed is used for SP interpolation, and when the reception mode is mobile reception, a spline interpolation coefficient value is used for SP interpolation, and therefore it is possible to obtain favorable reception characteristics in both cases where the reception mode is fixed-position reception and where the reception mode is mobile reception.

In the above explanations, whether the reception mode is fixed-position reception or mobile reception is decided based on the power of SPs. However, it is also possible to decide that the reception mode is mobile reception when a variation of the AGC voltage instead of the SP power is equal to or greater than a predetermined value and decide that the reception mode is fixed-position reception when the variation of the AGC voltage is smaller than the predetermined value. It is further possible to decide that the reception mode is mobile reception when a variation of the sum total of all carrier levels calculated from FFT-processed output is equal to or greater than a predetermined value and decide that the reception mode is fixed-position reception when the variation of the sum total of all carrier levels is smaller than the predetermined value.

As explained above, the equalizer according to the present invention switches between interpolation according to low pass filter coefficient values and interpolation according to spline interpolation coefficient values depending on whether the reception mode is fixed-position reception or mobile reception, and can thereby improve reception characteristics in both cases where the reception mode is fixed-position reception and where the reception mode is mobile reception.

### Claims

1. An equalizer for use in a digital terrestrial broadcasting receiver that receives an orthogonal frequency division multiplexing, OFDM, modulated signal, the equalizer comprising:

   extraction means (41) for extracting scattered pilots that are located every four OFDM symbols in the time direction in a demodulation output of the digital terrestrial broadcasting receiver;
   said equalizer is **characterized in that** it further comprises
   a spline interpolation coefficient value table (17) that stores spline interpolation coefficient values, wherein said table contains an odd number of said coefficient values, such that the coefficient value at the center position of the table (17) is set to 1 and coefficient values at positions spaced from said center position by $\pm$ 4n, where n is a natural number, are set to O
   a low pass filter coefficient value table (12) that stores low pass filter coefficient values;
   decision means (15) for deciding whether the reception mode of the digital terrestrial broadcasting receiver is fixed-position reception or mobile reception;
   a changeover switch (16) that operates to select a low pass filter coefficient value read from the low pass filter coefficient value table when the decision means decides that the reception mode is fixed-position reception, and to select a spline interpolation coefficient value read from the spline interpolation coefficient value table when the decision means decides that the reception mode is mobile reception; and
   a convolution calculation circuit (13) that executes a convolution calculation between the extracted scattered pilots in the time direction and coefficient values output through the changeover switch to obtain equalization coefficients,

   wherein demodulated output is equalized (45) on the basis of the scattered pilots in the time direction and the said obtained equalization coefficients.

2. The equalizer according to claim 1, wherein the decision means calculates power of a scattered pilot at a predetermined position extracted from the extraction means and wherein the decision means decides that the reception mode is mobile reception when a variation of the calculated power is equal to or greater than a predetermined value, and it decides that the reception mode is fixed-position when the variation of the calculated power is smaller than the predetermined value.

3. The equalizer according to claim 1, wherein the decision means decides that the reception mode is mobile reception when a variation of an AGC voltage of the digital terrestrial broadcasting receiver is equal to or greater than a predetermined value, and the decision means decides that the reception mode is fixed-position reception when the variation of an AGC voltage is smaller than the predetermined value.

**4.** The equalizer according to claim 1, wherein the decision means decides that the reception mode is mobile reception when a variation of the sum total of all carrier levels calculated from the FFT-processed output is equal to or greater than a predetermined value, and the decision means decides that the reception mode is fixed reception when the variation of the sum total of all carrier levels is smaller than the predetermined value.

**Patentansprüche**

**1.** Ausgleichsvorrichtung (equalizer) zur Verwendung in einem Empfänger für digitale terrestrische Übertragung, welcher ein durch orthogonales Frequenzteilungsmultiplexen, OFDM (orthogonal frequency division multiplexing), moduliertes Signal empfängt, wobei die Ausgleichsvorrichtung Folgendes umfasst:

eine Extraktionseinrichtung (41) zum Extrahieren gestreuter Piloten (scattered pilots), welche alle vier OFDM-Symbole angeordnet sind, in der Zeitrichtung in einem Demodulationsausgang des Empfängers für digitale terrestrische Übertragung;

wobei die Ausgleichsvorrichtung **dadurch gekennzeichnet ist, dass** sie weiterhin umfasst
eine Tabelle (17) für Spline-Interpolationskoeffizientenwerte, welche Spline-Interpolationskoeffizientenwerte speichert, wobei die Tabelle eine ungerade Anzahl der Koeffizientenwerte enthält, so dass der Koeffizientenwert an der zentralen Position der Tabelle (17) auf 1 gesetzt wird und Koeffizientenwerte an von der zentralen Position um $\pm$ 4n entfernten Positionen, mit n als einer natürlichen Zahl, auf 0 gesetzt werden;
eine Tabelle (12) für Tiefpassfilterkoeffizientenwerte, welche Tiefpassfilterkoeffizientenwerte speichert;
eine Entscheidungseinrichtung (15), welche entscheidet, ob der Empfangsmodus des Empfängers für digitale terrestrische Übertragung Festpositionsempfang oder Mobilempfang ist;
einen Umstellschalter (16), welcher so arbeitet, dass er einen aus der Tabelle für Tiefpassfilterkoeffizientenwerte ausgelesenen Tiefpassfilterkoeffizientenwert wählt, wenn die Entscheidungseinrichtung entscheidet, dass der Empfangsmodus Festpositionsempfang ist, und dass er einen aus der Tabelle für Spline-Interpolationskoeffizientenwerte ausgelesenen Spline-Interpolationskoeffizientenwert wählt, wenn die Entscheidungseinrichtung entscheidet, dass der Empfangsmodus Mobilempfang ist; und
einen Faltungsberechnungsschaltkreis (13), welcher eine Faltungsberechnung zwischen den extrahierten gestreuten Piloten in der Zeitrichtung und durch den Umstellschalter ausgegebenen Koeffizientenwerten ausführt, um Ausgleichskoeffizienten zu erhalten,
wobei der demodulierte Ausgang ausgeglichen wird (45) auf Grundlage der gestreuten Piloten in der Zeitrichtung und der erhaltenen Ausgleichskoeffizienten.

**2.** Ausgleichsvorrichtung nach Anspruch 1, bei der die Entscheidungseinrichtung die Stärke (power) eines von der Extraktionseinrichtung an einer vorbestimmten Position extrahierten gestreuten Piloten berechnet, und bei der die Entscheidungseinrichtung entscheidet, dass der Empfangsmodus Mobilempfang ist, wenn eine Variation der berechneten Stärke gleich einem vorbestimmten Wert oder größer als derselbe ist, und entscheidet, dass der Empfangsmodus Festpositionsempfang ist, wenn die Variation der berechneten Stärke kleiner ist als der vorbestimmte Wert.

**3.** Ausgleichsvorrichtung nach Anspruch 1, bei der die Entscheidungseinrichtung entscheidet, dass der Empfangsmodus Mobilempfang ist, wenn eine Variation einer AGC-Spannung des Empfängers für digitale terrestrische Übertragung gleich einem vorbestimmten Wert oder größer als derselbe ist, und die Entscheidungseinrichtung entscheidet, dass der Empfangsmodus Festpositionsempfang ist, wenn die Variation einer AGC-Spannung kleiner ist als der vorbestimmte Wert.

**4.** Ausgleichsvorrichtung nach Anspruch 1, bei der die Entscheidungseinrichtung entscheidet, dass der Empfangsmodus Mobilempfang ist, wenn eine Variation der aus dem FFTverarbeiteten Ausgang berechneten Gesamtsumme aller Trägerniveaus gleich einem vorbestimmten Wert oder größer als derselbe ist, und die Entscheidungseinrichtung entscheidet, dass der Empfangsmodus Festpositionsempfang ist, wenn die Variation der Gesamtsumme aller Trägerniveaus kleiner ist als der vorbestimmte Wert.

**Revendications**

**1.** Egaliseur destiné à être utilisé dans un récepteur de radiodiffusion terrestre numérique qui reçoit un signal à modulation de multiplexage par division orthogonale de fréquence, OFDM, l'égaliseur comprenant :

des moyens d'extraction (41) pour extraire des pilotes qui sont disposés tous les quatre symboles d'OFDM dans la direction du temps dans une sortie de démodulation du récepteur de radiodiffusion terrestre numérique ; ledit égaliseur étant **caractérisé en ce qu'**il comprend de plus :

une table de valeurs de coefficients d'interpolation de type spline (17) qui stocke des valeurs de coefficients d'interpolation de type spline, ladite table contenant un nombre impair desdites valeurs de coefficients, de telle sorte que la valeur de coefficient dans la position centrale de la table (17) soit établie à 1 et que des valeurs de coefficients dans des positions espacées de ladite position centrale de $\pm$ 4n, n étant un entier naturel, soient établies à 0 ;
une table de valeurs de coefficients de filtre passe-bas (12) qui stocke des valeurs de coefficients de filtre passe-bas ;
des moyens de décision (15) pour décider si oui ou non le mode de réception du récepteur de radiodiffusion terrestre numérique est une réception en position fixe ou une réception mobile ;
un commutateur de changement (16) qui fonctionne de façon à sélectionner une valeur de coefficient de filtre passe-bas lue dans la table de valeurs de coefficients de filtre passe-bas lorsque les moyens de décision décident que le mode de réception est une réception en position fixe, et à sélectionner une valeur de coefficient d'interpolation de type spline lue dans la table de valeurs de coefficients d'interpolation de type spline lorsque les moyens de décision décident que le mode de réception est une réception mobile ; et
un circuit de calcul de convolution (13) qui exécute un calcul de convolution entre les pilotes dispersés extraits dans la direction du temps et les valeurs de coefficients fournies en sortie par l'intermédiaire du commutateur de changement pour obtenir des coefficients d'égalisation,

dans lequel la sortie démodulée (45) est égalisée sur la base des pilotes dispersés dans la direction du temps et desdits coefficients d'égalisation obtenus.

2. Egaliseur selon la revendication 1, dans lequel les moyens de décision calculent la puissance d'un pilote dispersé à une position prédéterminée extraite par les moyens d'extraction, et dans lequel les moyens de décision décident que le mode de réception est la réception mobile lorsqu'une variation de la puissance calculée est égale ou supérieure à une valeur prédéterminée, et ils décident que le mode de réception est la position fixe lorsque la variation de la puissance calculée est inférieure à la valeur prédéterminée.

3. Egaliseur selon la revendication 1, dans lequel les moyens de décision décident que le mode de réception est la réception mobile lorsqu'une variation d'une tension de CAG (commande automatique de gain) du récepteur de radiodiffusion terrestre numérique est égale ou supérieure à une valeur prédéterminée, et les moyens de décision décident que le mode de réception est une réception en position fixe lorsque la variation d'une tension de CAG est inférieure à la valeur prédéterminée.

4. Egaliseur selon la revendication 1, dans lequel les moyens de décision décident que le mode de réception est la réception mobile lorsqu'une variation de la somme totale de tous les niveaux de porteuse calculée à partir de la sortie soumise à un traitement de TFR (transformée de Fourier rapide) est égale ou supérieure à une valeur prédéterminée, et les moyens de décision décident que le mode de réception est la réception fixe lorsque la variation de la somme totale de tous les niveaux de porteuse est inférieure à la valeur prédéterminée.

# FIG. 1

# FIG. 2

SP1, 0, 0, 0 →
SP2, 0, 0, 0
SP3, 0, 0, 0
------
------

| 0 |
|---|
| 0 |
| SP3 |
| 0 |
| 0 |
| 0 |
| SP2 |
| 0 |
| 0 |
| 0 |
| SP1 |

~11 (α)

13 (α)

CONVOLUTION
CALCULATION
CIRCUIT

SP1', SP1-1, SP1-2, SP1-3,
SP2', SP2-1, SP2-2, SP2-3,
SP3', SP3-1, SP3-2, SP3-3,
----------
----------

| K0 | K1=0 | K2 | K3 | K4 | K5=1 | K6 | K7 | K8 | K9=0 | K10 |
|----|------|----|----|----|------|----|----|----|------|-----|
| C0 | C1 | C2 | C3 | C4 | C5 | C6 | C7 | C8 | C9 | C10 |

17

| SP1' |
|------|
| SP1-1 |
| SP1-2 |
| SP1-3 |
| SP2' |
| SP2-1 |
| SP2-2 |
| SP2-3 |
| SP3' |
| SP3-1 |
| SP3-2 |
| SP3-3 |

P

# FIG. 3

# FIG. 4

FIG. 5

EP 1 349 335 B1

# FIG. 6

FREQUENCY ⟶

TIME

| SP | – | – | * | – | – | * | – | – | * | – | – | SP | – | – |
| * | – | – | SP | – | – | * | – | – | * | – | – | * | – | – |
| * | – | – | * | – | – | SP | – | – | * | – | – | * | – | – |
| * | – | – | * | – | – | * | – | – | SP | – | – | * | – | – |
| SP | – | – | * | – | – | * | – | – | * | – | – | SP | – | – |
| * | – | – | SP | – | – | * | – | – | * | – | – | * | – | – |

α    β    γ    δ    -----------------

EP 1 349 335 B1

# FIG. 7

PRE-INTERPOLATION SP

POST-INTERPOLATION SP

β

γ

α

MEMORY ⎯⎯11

β

γ

α

CONVOLUTION CALCULATION CIRCUIT ⎯⎯13

42

LOW PASS FILTER COEFFICIENT VALUE TABLE ⎯⎯12

# FIG. 8

SP1, 0, 0, 0 →
SP2, 0, 0, 0
SP3, 0, 0, 0
- - - - - -
- - - - - -

| 0 |
|---|
| 0 |
| SP3 |
| 0 |
| 0 |
| 0 |
| SP2 |
| 0 |
| 0 |
| 0 |
| SP1 |

11 (α)

13 (α)

CONVOLUTION
CALCULATION
CIRCUIT

SP1', SP1-1, SP1-2, SP1-3,
SP2', SP2-1, SP2-2, SP2-3,
SP3', SP3-1, SP3-2, SP3-3,
- - - - - - - - - -
- - - - - - - - - -

| b0 | b1 | b2 | b3 | b4 | b5 | b6 | b7 | b8 | b9 | b10 |
|----|----|----|----|----|----|----|----|----|----|-----|
| C0 | C1 | C2 | C3 | C4 | C5 | C6 | C7 | C8 | C9 | C10 |

12

| SP1' |
|------|
| SP1-1 |
| SP1-2 |
| SP1-3 |
| SP2' |
| SP2-1 |
| SP2-2 |
| SP2-3 |
| SP3' |
| SP3-1 |
| SP3-2 |
| SP3-3 |

n

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1032169 A